# DEMANDE DE BREVET EUROPEEN

(11) **EP 0 733 832 A1**
(43) Date de publication de la demande: **25.09.1996**
(21) Numéro de dépôt: 96400566.4
(22) Date de dépôt: 19.03.1996
(51) Int. Cl.: F16H 48/28

(54) **Perfectionnements aux différentiels autobloquants**

(30) Priorité: 20.03.1995 FR 9503204
(71) Demandeur: LAJOUS INDUSTRIES S.A., 60200 Compiègne (FR)
(72) Inventeur: Crasset, Dominique, 95230 Soisy sous Montmorency (FR)
(74) Mandataire: Bloch, Gérard

(57) **Abrégé**

L'invention a pour objet un différentiel autobloquant, comprenant un organe d'entrée (3), deux organes de sortie (8), deux arbres de sortie (11) associés chacun à l'un des organes de sortie, des moyens de solidarisation à éléments mobiles axialement pour solidariser par leur déplacement axial deux des trois organes d'entrée et de sortie, et au moins une came de blocage (10) agencée pour s'opposer audit déplacement axial des moyens de solidarisation tant que le couple résistant sur chaque arbre de sortie conserve une valeur suffisante par rapport au couple d'entrée.

Il comprend au moins une pièce d'usure (20-22) agencée pour compenser l'usure des moyens de solidarisation.

## Description

La présente invention concerne des perfectionnements aux différentiels autobloquants, et plus particulièrement à de tels différentiels comprenant un organe d'entrée, deux organes de sortie, deux arbres de sortie associés chacun à l'un des organes de sortie, des moyens de solidarisation à éléments mobiles axialement pour solidariser par leur déplacement axial deux des trois organes d'entrée et de sortie, et au moins une came de blocage agencée pour s'opposer audit déplacement axial des moyens de solidarisation tant que le couple résistant sur chaque arbre de sortie conserve une valeur suffisante par rapport au couple d'entrée.

On connaît de tels différentiels autobloquants, par exemple par les documents US-A-5102378 et EP-A-0366563, dont le contenu sera considéré comme faisant partie intégrante de la présente demande.

Un problème se pose dans ces différentiels du fait de l'usure des moyens de solidarisation, généralement constitués d'un embrayage à disques ou à cônes.

La présente invention vise à pallier ces inconvénients.

A cet effet, l'invention a pour objet un différentiel autobloquant, comprenant un organe d'entrée, deux organes de sortie, deux arbres de sortie associés chacun à l'un des organes de sortie, des moyens de solidarisation à éléments mobiles axialement pour solidariser par leur déplacement axial deux des trois organes d'entrée et de sortie, et au moins une came de blocage agencée pour s'opposer audit déplacement axial des moyens de solidarisation tant que le couple résistant sur chaque arbre de sortie conserve une valeur suffisante par rapport au couple d'entrée, caractérisé par le fait qu'il comprend au moins une pièce d'usure agencée pour compenser l'usure des moyens de solidarisation.

Plus particulièrement, l'organe d'entrée peut être en appui sur l'un des arbres de sortie par l'intermédiaire d'une pièce d'usure.

Les organes de sortie peuvent également être en appui l'un sur l'autre par intermédiaire d'une pièce d'usure.

L'un des arbres de sortie peut également être en appui sur un boîtier par l'intermédiaire d'une pièce d'usure.

Dans un mode de réalisation particulier de l'invention, lesdites cames de blocage sont formées entre les arbres de sortie et les organes de sortie, l'organe d'entrée est en appui sur l'un des arbres de sortie, l'autre arbre de sortie est en butée sur un boîtier, l'organe d'entrée est mobile par rapport audit boîtier pour déplacer axialement lesdits moyens de solidarisation, et lesdites pièces d'usure sont disposées entre l'organe d'entrée et ledit arbre de sortie sur lequel il est en appui, et/ou entre ledit arbre de sortie en butée sur ledit boîtier et ledit boîtier, et/ou entre lesdits organes de sortie.

On décrira maintenant, à titre d'exemple non limitatif, un mode de réalisation particulier de l'invention, en référence aux dessins schématiques annexés dans lesquels:

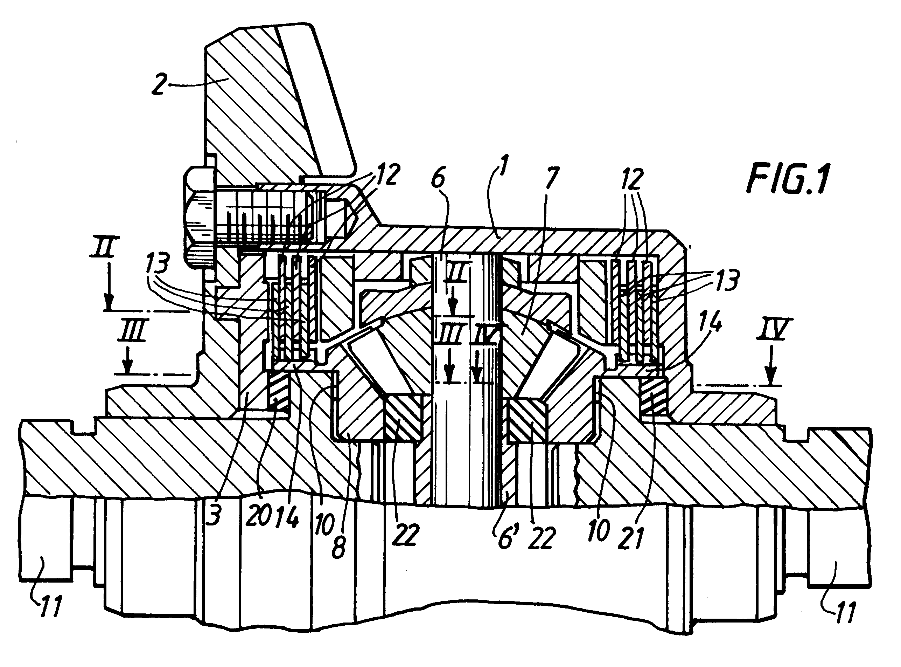

- la figure 1 est une vue partielle en coupe axiale d'un différentiel selon l'invention;

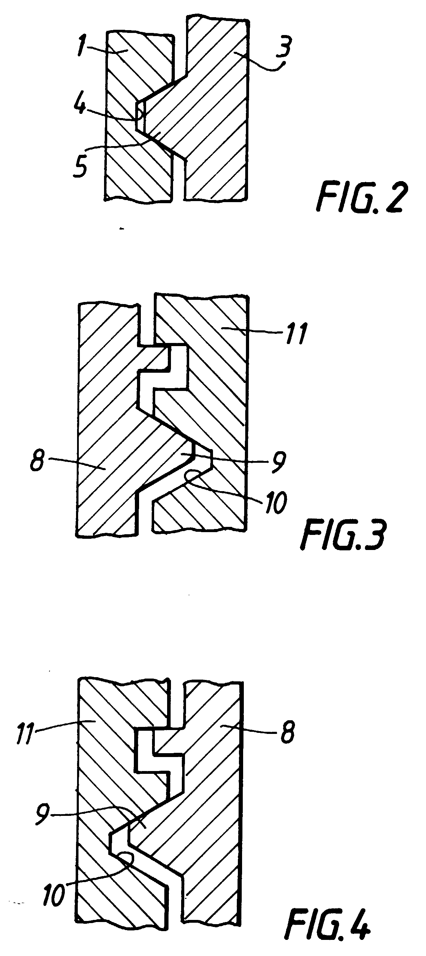

- la figure 2 est une vue en coupe selon la ligne ll-ll de la figure 1;
- la figure 3 est une vue en coupe selon la ligne III-III de la figure 1; et
- la figure 4 est une vue en coupe selon la ligne IV-IV de la figure 1.

De façon connue, ce différentiel possède un boîtier extérieur 1 entraîné en rotation par un pignon conique 2 lui-même entraîné à partir de l'arbre de sortie d'une boîte de vitesse non représentée. Ce boîtier 1 entraîne à son tour un organe d'entrée 3 par l'intermédiaire d'une rainure à section transversale en V 4 coopérant avec une nervure 5 de l'organe 3.

Un axe 6 solidaire d'un croisillon 6' porte les pignons satellites 7 du différentiel, engrenant avec les pignons planétaires 8. Ces derniers forment des nervures 9 coopérant avec des rainures à section transversale en V 10 formées sur les arbres de sortie 11. Le croisillon 6', l'axe 6, les pignons 7 et 8 et l'arbre de sortie 11 de gauche (sur la figure) sont mobiles axialement dans le boîtier 1, pour pouvoir se déplacer avec l'organe d'entrée 3.

Lorsque les plans inclinés des nervures 5 montent sur les rampes des rainures 4, l'organe d'entrée 3 presse les uns contre les autres les disques d'un embrayage susceptible de solidariser l'un des organes de sortie 8 avec l'organe d'entrée 3. Ces disques 12 et 13 sont respectivement solidaires en rotation de l'organe d'entrée 3 et de jupes cylindriques 14 réalisées d'une seule pièce avec les planétaires 8.

Lorsque le couple résistant sur l'un des arbres de sortie devient inférieur à une valeur fonction du couple d'entrée, la nervure 9 redescend au fond de la rainure 10 correspondante, autorisant la nervure 5 de monter sur les rampes de la rainure 4, provoquant ainsi un mouvement axial des éléments de l'embrayage correspondant qui solidarise l'organe d'entrée 3 avec l'organe de sortie respectif 8.

Tout ceci est connu par les documents mentionnés ci-dessus.

On observera ici que pour obtenir le fonctionnement qui vient d'être décrit, l'organe d'entrée 3 est solidaire en translation de l'arbre de sortie 11 de gauche, tandis que l'autre arbre 11 est en butée sur le boîtier 1.

Lorsque la came 9,10 de gauche fléchit, seul l'organe d'entrée 3 et l'arbre de sortie de gauche se déplacent. Lorsque c'est la came de droite qui fléchit, l'ensemble constitué de l'organe 3, des pignons 7 et 8, et de l'axe 6 avec le croisillon 6', se déplace.

Il en résulte que l'usure des disques 12,13 ne doit pas être telle que le jeu des rampes des rainures 10 ne permette plus leur fonctionnement.

Selon l'invention, ce problème est résolu en disposant des rondelles d'usure 20 entre l'organe d'entrée 3 et l'arbre de sortie 11 de gauche, 21 entre l'autre arbre de sortie 11 et le boîtier 1, et 22 entre les planétaires 8 et le croisillon 6' et donc entre les planétaires 8. Les rondelles ainsi disposées, de même que leur capacité d'usure, sont déterminées de telle sorte que cette usure compense celle des embrayages sans qu'il soit nécessaire d'augmenter au-delà de ce qui est souhaitable la profondeur des rainures 10.

L'invention vient d'être exposée en référence à l'un des modes de réalisation décrits dans le document US-A-5102378 mais pourrait bien entendu être appliquée aux autres modes de réalisation. En outre, l'une seule ou un nombre quelconque des pièces d'usure 20 à 22 pourrait être prévue, de manière à augmenter dans la mesure souhaitée la durée de vie du dispositif.

## Revendications

1. Différentiel autobloquant, comprenant un organe d'entrée (3), deux organes de sortie (8), deux arbres de sortie (11 ) associés chacun à l'un des organes de sortie, des moyens de solidarisation à éléments mobiles axialement pour solidariser par leur déplacement axial deux des trois organes d'entrée et de sortie, et au moins une came de blocage (10) agencée pour s'opposer audit déplacement axial des moyens de solidarisation tant que le couple résistant sur chaque arbre de sortie conserve une valeur suffisante par rapport au couple d'entrée, caractérisé par le fait qu'il comprend au moins une pièce d'usure (20-22) agencée pour compenser l'usure des moyens de solidarisation.

2. Différentiel autobloquant selon la revendication 1, dans lequel l'organe d'entrée est en appui sur l'un des arbres de sortie par l'intermédiaire d'une pièce d'usure (20).

3. Différentiel autobloquant selon l'une quelconque des revendications 1 et 2, dans lequel les organes de sortie sont en appui l'un sur l'autre par intermédiaire d'une pièce d'usure (22).

4. Différentiel autobloquant selon l'une quelconque des revendications 1 et 3 dans lequel l'un des arbres de sortie est en appui sur un boîtier (1 ) par l'intermédiaire d'une pièce d'usure (21).

5. Différentiel autobloquant selon l'une quelconque des revendications 1 à 4, dans lequel lesdites cames de blocage sont formées entre les arbres de sortie et les organes de sortie, l'organe d'entrée est en appui sur l'un des arbres de sortie, l'autre arbre de sortie est en butée sur un boîtier, l'organe d'entrée est mobile par rapport audit boîtier pour déplacer axialement lesdits moyens de solidarisation, et lesdites pièces d'usure (20) sont disposées entre l'organe d'entrée et ledit arbre de sortie sur lequel il est en appui.

6. Différentiel autobloquant selon l'une quelconque des revendications 1 à 5, dans lequel lesdites cames de blocage sont formées entre les arbres de sortie et les organes de sortie, l'organe d'entrée est en appui sur l'un des arbres de sortie, l'autre arbre de sortie est en butée sur un boîtier, l'organe d'entrée est mobile par rapport audit boîtier pour déplacer axialement lesdits moyens de solidarisation, et lesdites pièces d'usure (21) sont disposées entre ledit arbre de sortie en butée sur ledit boîtier et ledit boîtier.

7. Différentiel autobloquant selon l'une quelconque des revendications 1 à 6, dans lequel lesdites cames de blocage sont formées entre les arbres de sortie et les organes de sortie, l'organe d'entrée est en appui sur l'un des arbres de sortie, l'autre arbre de sortie est en butée sur un boîtier, l'organe d'entrée est mobile par rapport audit boîtier pour déplacer axialement lesdits moyens de solidarisation, et lesdites pièces d'usure (22) sont disposées entre lesdits organes de sortie.
